# EUROPEAN PATENT APPLICATION

(11) **EP 3 531 246 A1**
(43) Date of publication of application: **28.08.2019**
(21) Application number: 19159207.0
(22) Date of filing: 25.02.2019
(51) Int. Cl.: G06F 3/01

(54) **SYSTEMS AND METHODS FOR HAPTIFYING VIRTUAL OBJECTS USING SMART STICKERS**

(30) Priority: 23.02.2018 US 201815903837
(71) Applicant: Immersion Corporation, San Jose, CA 95134 (US)
(72) Inventor: Wu, Liwen, Montreal, Québec H2W 2R2 (CA)
(74) Representative: Slingsby Partners LLP

(57) **Abstract**

Example systems and methods for haptifying virtual objects using smart stickers are taught. One example sticker device includes a haptic output device; a non-transitory computer-readable medium storing processor-executable instructions; and a processor in communication with the haptic output device, and the non-transitory computer-readable medium, the processor configured to execute the processor-executable instructions to: receive a sensor signal from the sensor; determine a haptic effect based on the sensor signal; and transmit a haptic signal to the haptic output device to cause the haptic output device to output a haptic effect.

## Description

### FIELD

The present application generally relates to haptics, and more specifically relates to systems and methods for haptifying virtual objects using smart stickers.

### BACKGROUND

User interfaces may employ haptic effects to provide tactile responses to users of the interface. For example, vibration effects may be played upon receipt of a phone call or text message by a smartphone. Such effects may notify the user of events that are occurring, or they may be output during video games, such as to indicate damage taken by the user's vehicle or the firing of a weapon.

### SUMMARY

Various examples are described for systems and methods for haptifying virtual objects using smart stickers. For example, one example sticker device, which may be suitable for haptic interaction in augmented or virtual reality, includes a haptic output device; a non-transitory computer-readable medium storing processor-executable instructions; and a processor in communication with the haptic output device and the non-transitory computer-readable medium. The processor is configured to execute the processor-executable instructions to: receive a sensor signal from a sensor; determine a haptic effect based on the sensor signal; and transmit a haptic signal to the haptic output device to cause the haptic output device to output a haptic effect.

The haptic output device may comprise a non-contact haptic output device which may comprise any one or more of an ultrasound device, an electrostatic friction device, or a compressed air device.

The sticker device may further comprise a housing and the housing may include an identification mechanism and/or a coupling device to couple the housing to an object. A suitable identification mechanism may be at least one of a bar code, a display, or a radio frequency identification ("RFID") tag. A suitable coupling device may be at least one of an adhesive, a ferromagnetic material, or a ferrous material.

The sticker device may or may not include a sensor such as the sensors discussed above. The sensor may comprise a camera, and the sensor signal may comprise one or more images, and the processor may be configured to execute the processor-executable instructions to determine a gesture based on the sensor signal.

Another example device includes a non-transitory computer-readable medium storing processor-executable instructions; and a processor in communication with a sensor and the non-transitory computer-readable medium. The processor is configured to execute the processor-executable instructions to: receive a sensor signal from a sensor; detect a sticker device for haptic interaction in augmented or virtual reality based on the sensor signal; determine a virtual object associated with the sticker device; and output a signal to cause a display device to display the virtual object. Such a device may be part of a head mounted device (HMD) or may be a computing device that is separate from an HMD or other user interface device. The device may also be a server.

The processor may be configured to execute the processor-executable instructions to output a signal to cause the display device to display the virtual object at a location corresponding to the sticker device.

The processor may be configured to execute the processor-executable instructions to: receive sticker location information from a remote computing device; determine position and location information for the device in a real environment based on the sensor signal; and detect the sticker device based on the position and location information for the device and the sticker location information.

The device may or may not comprise a sensor such as the sensors discussed above. The sensor may comprise a camera and/or a radio frequency identification ("RFID") reader. In examples where the sensor comprises a camera, the processor may be configured to execute the processor-executable instructions to determine either a visual identifier of the sticker device, and to determine the virtual object based on the visual identifier and/or a gesture based on the sensor signal. In examples where the sensor comprises a radio frequency identification

("RFID") reader, the processor may be configured to execute the processor-executable instructions to receive an identifier from the RFID reader, the identifier obtained from an RFID tag associated with the sticker device, and to determine the virtual object based on the identifier.

The processor may be configured to execute the processor-executable instructions to output a signal to cause the display device to display an animation of the virtual object at a location corresponding to the sticker device.

The processor may be configured to execute the processor-executable instructions to: responsive to determining that the sticker is coupled to a user, output a signal to the sticker device to cause the sticker to output a contact-based haptic effect; and responsive to determining that the sticker device is not coupled to the user and that the sticker device is within an interaction range, output a signal to the sticker device to cause the sticker device to output a non-contact haptic effect. The non-contact haptic effect can be any one or more of an ultrasound effect, an electrostatic friction effect, a compressed air effect.

The above-discussed features can be provided in any feasible combination. Moreover, any of the sticker devices discussed above could be used in conjunction with any of the example devices.

These illustrative examples are mentioned not to limit or define the scope of this disclosure, but rather to provide examples to aid understanding thereof. Illustrative examples are discussed in the Detailed Description, which provides further description. Advantages offered by various examples may be further understood by examining this specification.

### BRIEF DESCRIPTION OF THE DRAWINGS

The accompanying drawings, which are incorporated into and constitute a part of this specification, illustrate one or more certain examples and, together with the description of the example, serve to explain the principles and implementations of the certain examples.
Figure 1 shows an example system for haptifying virtual objects using smart stickers;
Figures 2A-2B show an example system for haptifying virtual objects using smart stickers;
Figure 3 shows an example system for haptifying virtual objects using smart stickers;
Figure 4 shows an example sticker device suitable for use with example systems and methods for haptifying virtual objects using smart stickers;
Figure 5 shows an example computing device suitable for use with example systems and methods for haptifying virtual objects using smart stickers; and
Figures 6-7 show example methods for haptifying virtual objects using smart stickers.

### DETAILED DESCRIPTION

Examples are described herein in the context of systems and methods for haptifying virtual objects using smart stickers. Those of ordinary skill in the art will realize that the following description is illustrative only and is not intended to be in any way limiting. Reference will now be made in detail to implementations of examples as illustrated in the accompanying drawings. The same reference indicators will be used throughout the drawings and the following description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

In one illustrative example, a user may interact with an augmented reality ("AR") environment while wearing a head-mounted device ("HMD") that has a partially transparent visor through which the user can see the real environment around them. However, the HMD includes a display device that displays information on the visor to augment the real environment. In this example, the HMD includes a camera that captures images of the real environment and detects haptic stickers that have been applied to one or more objects in the real environment. After detecting a haptic sticker, it identifies the sticker, such as by its position within the real environment, based on identifying markings on the sticker, or based on information received wirelessly from the sticker. The HMD may then determine a particular object in the environment based on the sticker's identity, or information received from the sticker, and display a virtual object on the HMD visor so that it appears overlaid on the sticker.

For example, a user may view a real environment through the visor and may wear a sticker on a band on her wrist. When she turns her gaze to the sticker, the HMD detects the sticker using the camera, determines that the sticker corresponds to a virtual smartwatch based on identifying markings on the sticker, and displays a virtual smartwatch overlaid on the sticker. Thus, the HMD provides to the user the appearance of wearing a smartwatch in the AR environment. Further, the HMD may use the virtual smartwatch to provide information to the user, such as the time, date, weather information, text message or email information, social media information, alarm information, etc., as though the user were wearing a real smartwatch. The user may interact with the virtual smartwatch in the AR environment by performing gestures in space that may be detected by the HMD's camera (or a camera built into the sticker). The gestures may be used to respond to text messages or email, turn off alarm notifications, scroll through different information screens (e.g., weather, date/time, calendar, etc.), etc. In response to those gestures, the sticker or the HMD may output one or more haptic effects to the user. In this example, the sticker is equipped with a speaker to output ultrasonic vibrations that are perceivable as haptic effects. Such haptic effects may be output based on user actions, such as gestures, or to alert the user to one or more notifications or events. Such an implementation may enable the user to receive and respond to information from a virtual smartwatch without the risk that others nearby may be able to view the information presented to her.

While the previous example discussed the use of a sticker as a wearable device, stickers may be associated with and applied to any object in a real environment to enable AR or virtual reality ("VR") interactions with the device, such as by providing a user interface for the device, providing objects within a gaming environment, providing information about the corresponding object, etc. Further, such stickers, when equipped with haptic output devices, may enable tactile interactions within an AR or VR environment without requiring the user to wear haptic gloves or hold other haptically-enabled devices.

This illustrative example is given to introduce the reader to the general subject matter discussed herein and the disclosure is not limited to this example. The following sections describe various additional non-limiting examples and examples of systems and methods for haptifying virtual objects using smart stickers.

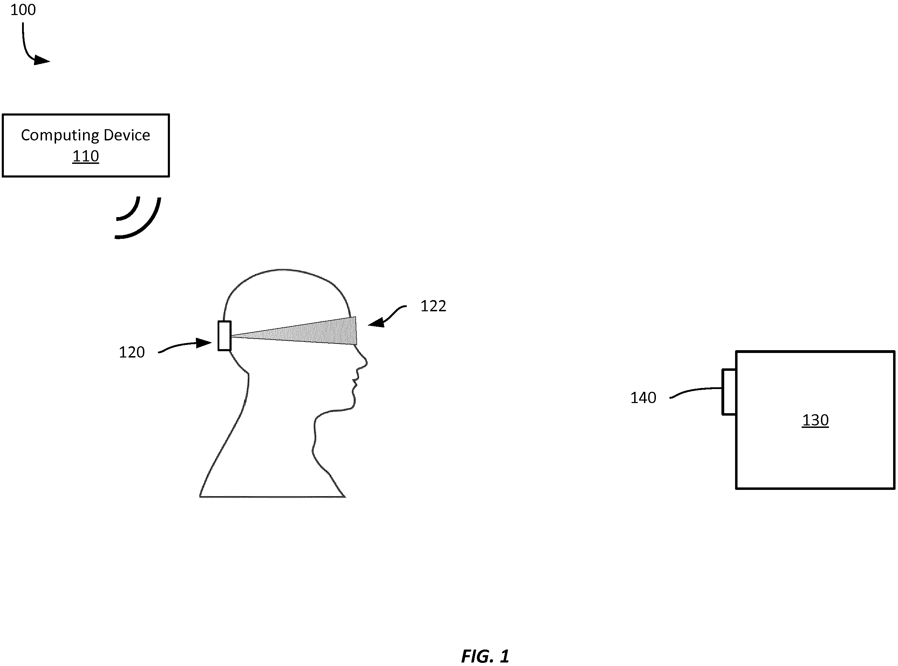

Referring now to Figure 1, Figure 1 shows an example system 100 for haptifying virtual objects using smart stickers. The system 100 includes a computing device 110 communicatively coupled to a HMD 120. The HMD 120 includes a visor 122 that a user wears over her eyes and a camera oriented to capture images of the real environment within the field of view of the user. During operation, the HMD 120 displays images on the visor that can include information about an AR or virtual reality ("VR") environment such as location, an avatar's health or other statistics (such as in a gaming environment), targeting information, virtual objects overlaid within the AR or VR environment, etc. The system 100 also includes a sticker device 140 that has been affixed to an object 130 within a real environment.

A "real environment" refers to a physical environment that may include one or more physical objects, such as a room in a house, a street, a park, etc. In contrast, a "virtual environment," such as AR or VR environments, is an environment maintained by a computing device that may include one or more virtual objects. A user may interact with a virtual environment through one or more user interface devices or sensors. In some examples, a virtual environment may be overlaid on a real environment, such as to augment the real environment, or to take advantage of physical objects within the real environment that can be used to provide tactile response to users interacting with the virtual environment, such as by providing physical barriers or physical objects that the user can interact with, while being presented via a display device with a visual representation of a virtual object overlaid on the physical object. Absent such physical objects, tactile responses within the virtual environment may be simulated using haptic output devices that may be worn by the user or within user interface devices held or touched by the user.

In addition to displaying information on the visor 122, the HMD 120 also captures images using its camera. The captured images may then be processed by the HMD 120 or the computing device 110 to identify objects within the real environment. In this example, the HMD 120 may capture one or more images that include the sticker 140. The HMD 120 or computing device 110 may identify the sticker based on identifying markings on the sticker, such as a bar code or letters or numbers. After recognizing the sticker 140, the HMD 120 or computing device 110 may access a database to determine a virtual object associated with the sticker 140 and to display the virtual object within a virtual environment. In this example, the HMD 120 displays the virtual object at a location corresponding to the detected location of the sticker 140 so that it appears to the user that the virtual object is located on top of the sticker 140.

In this example, the computing device 110 and the HMD 120 are discrete components with separate housings that communicate with each other via WiFi. Different example systems may employ other kinds of suitable wired or wireless communication techniques, including Bluetooth ("BT"), low-energy BT ("BLE"), WiFi, near-field communications ("NFC"), cellular, Ethernet, HDMI, DisplayPort, etc. In some examples, the computing device 110 and the HMD 120 may be integrated into a single wearable device rather than separated amongst two or more different devices.

The system 100 shown in Figure 1 includes only one sticker, however, any suitable number and arrangement of stickers may be employed according to different examples. Further, while this example includes only one HMD 120 and one computing device 110, any number of users having an HMD or other user interface device may interact within a common virtual environment. In one such example, each of the HMDs may communicate with a common computing device 110, or one or more HMDs may have its own computing device that communicates with another computing device, e.g., a server, to obtain information about a virtual environment and to enable interactions within the virtual environment. For example, HMD 120 may have an integrated computing device, and the computing device 110 may represent a server computer that maintains a virtual environment and communicates with one or more HMDs interacting with the virtual environment.

While the system 100 includes an HMD 120 in this example, other examples may include other user interface device, including interface devices suitable for use with virtual environments, including keyboards, mice, joysticks, steering wheels, display devices, wands, styluses, swords, simulated firearms, etc. Such interface devices may communicate with the HMD 120 or computing device 110 using any suitable wired or wireless communication technique to provide input signals or receive signals from the HMD 120 or computing device 110 to provide outputs, such as haptic effects, audio or visual effects, change configuration parameters, etc. In some examples, the HMD 120 or computing device 110 may receive sensor signals to detect movement or inputs from such user interface devices. For example, one or more cameras may detect movements of the interface device.

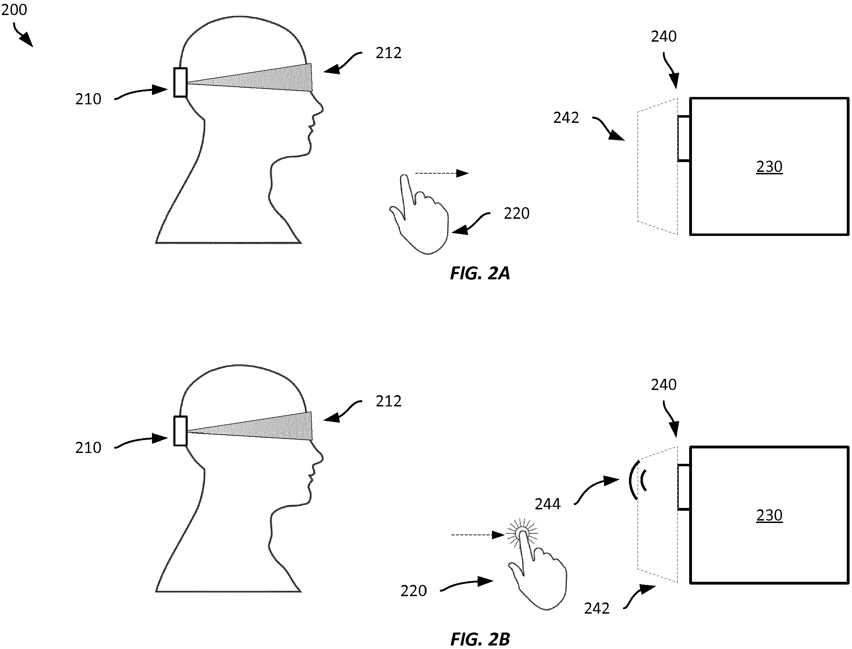

Referring now to Figures 2A-2B, Figure 2A shows an example system 200 for haptifying virtual objects using smart stickers. In this example, a user is wearing a HMD 120 that includes a visor 212, and is participating in an AR-based video game. The HMD 210 in this example includes an integrated computing device, such as the computing device 110 shown in Figure 1. The system also includes a sticker 240 that has been affixed to an object 230 within a real environment. In this example, the sticker 240 includes a display device that displays a two-dimensional bar code that uniquely identifies the sticker 240 within the real environment. In addition, the sticker 240 includes a wireless transceiver for wireless communications using BLE and a speaker to output ultrasound waves to provide non-contact-based haptic effects.

In this example, the user's HMD 210 detects the sticker 240 using a camera to capture images of the real environment within the user's field of view. The camera captures an image that includes the sticker 140 and the two-dimensional bar code, which the HMD 210 parses to determine the identity of the sticker 240, though in some examples, the two-dimensional barcode may instead identify a virtual object rather than the sticker itself. In this example, the sticker 240 corresponds to a virtual object that provides an electronic keypad to open a safe within the video game. Thus, the HMD 210 determines a virtual object 242 associated with the sticker 240-a safe with an electronic keypad in this case-based on the sticker's identity, and displays the virtual object 242 on the visor 212 at a location corresponding to the sticker 240.

After the HMD 210 has displayed the virtual object 242, the user can interact with the virtual object 242 to try to open the safe. For example, the user can try entering a combination for the virtual safe by pressing virtual keys on the virtual electronic keypad using pressing gestures. In this example, the HMD 210 tracks the user's hand 220 as she moves it over one of the keys on the keypad and then presses outward towards the control pad to make a press gesture. In some examples, the sticker device may detect the gesture, such as by using its own camera or other sensors connected to or within the sticker itself.

Figure 2B illustrates the user's hand after she has moved it forward in the press gesture, which is interpreted by the HMD 210 as a press of a button. The press gesture creates an interaction with a virtual key on the virtual keypad which is provided an input to the video game by the HMD 210. In addition, the HMD 210 transmits a message to the sticker 240 to cause the sticker 240 to output an ultrasonic haptic effect. The sticker 240 then outputs an ultrasonic sound wave using its speaker, which may be felt by the user's fingertip (or hand). As the user continues to press keys on the virtual keypad, she continues to receive haptic effects from the sticker 240, and, if she enters the correct combination, she may receive a further haptic effect and be presented with an animation of the safe door opening and the interior of the safe displayed over the sticker 240. If she does not enter the correct combination, the sticker 240 may output a haptic effect indicating the wrong combination was entered.

Thus, the system 200 in Figures 2A-2B illustrate how a user may use smart stickers to help interact with a virtual environment. While the example discussed above was in the context of a video game, such techniques may be usable in other settings, such as to control appliances (e.g., a refrigerator, water heater, television, radio, streaming device, game console, etc.) within a person's home, interact with a thermostat, door lock, etc. In some examples may be usable with virtual objects like user interfaces for smartphones, smartwatches, or other wearable devices without the need to physically interact with the wearable device.

For example, within her house a user may have affixed one or more sticker devices to appliances or electronic devices. Thus, if the user employs a HMD at home, she may be presented with virtual user interfaces for the appliances or electronic devices that have applied sticker devices. For example, while sitting in a recliner in the living room, the user may look across the room at the stereo and be presented with a virtual object having interface controls for the stereo, such as a volume knob, a radio dial, input selects, etc. She may then interact with the interface controls while remaining in the recliner across the room from the stereo to change radio stations, change the volume, switch to a different audio or audio/visual input, etc. by performing gestures. Such interfaces may be provided in other contexts as well, such as with respect to a thermostat to change temperatures or from air conditioning to heating, alarm systems, ovens, cooking ranges, etc. Thus, stickers may be employed to provide virtual user interfaces to any suitable device within a real environment.

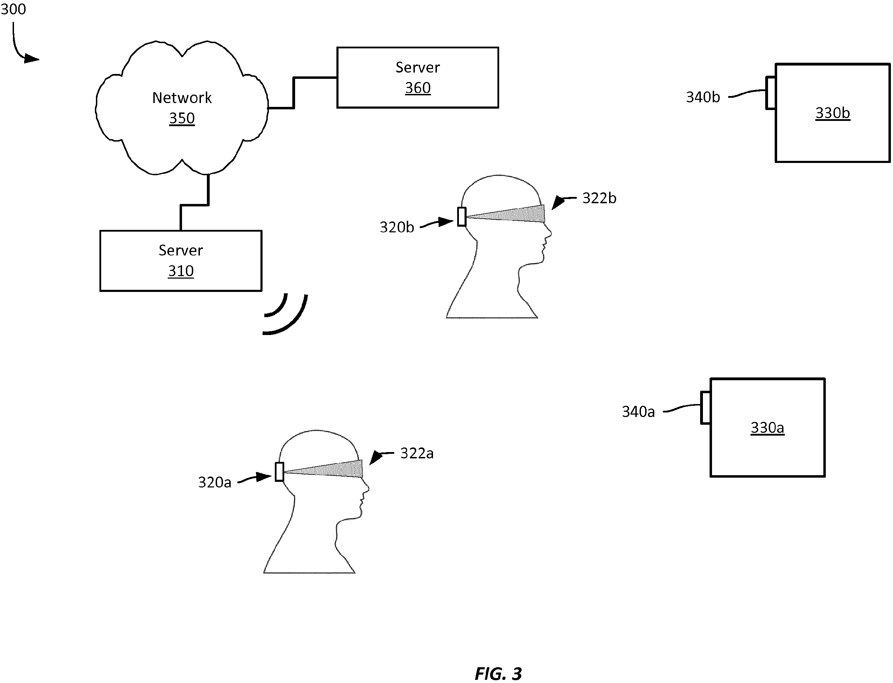

Referring now to Figure 3, Figure 3 shows an example system 300 for haptifying virtual objects using smart stickers. In this example, the system 300 includes a server 310 in communication with multiple HMDs 320a-b (each with a respective visor 320a-b). Objects 330a-b positioned within a real environment each are equipped with a sticker 340a-b. The server 310 provides a virtual environment to the HMDs 320a-b, such as a gaming environment (e.g., an entirely simulated gaming environment, such as a video game, or an AR gaming environment, such as in a laser tag or paintball arena), an office environment, a home environment, etc. The server 310 obtains information from a remote server 360 via network 350. The obtained information can include virtual environment information (e.g., the locations and identities of virtual objects and associated stickers), haptic effect information, user account or profile information (including security information, such as authority to interact with one or more virtual objects), etc.

In this example, the two users are each interacting with the same virtual environment via their respective HMD 320a-b. The HMDs 320a-b wirelessly communicate with the server 310 to obtain information about the virtual environment, obtain information about one or more identified stickers 340a-b, obtain virtual objects within the virtual environment, etc. In addition, the HMDs 320a-b display information about the virtual environment on the respective visor 322a-b, and include one or more sensors that may be used to sense a location or orientation of the HMD within the real environment or to detect stickers 340a-b, gestures, or other user inputs.

The server 360 may be any suitable computing device according to this disclosure. Within the system 300 shown in Figure 3, the server 360 provides virtual environment information to the server 310. For example, the server 310 may transmit a request to the server 360 to obtain information about a virtual environment when a user activates a video game, or when the user enters a different area within the virtual environment. In some examples, the server 360 may be in communication with more than one server 310 to allow multiple users at different locations to interact with a common virtual environment, such as in the context of a multiplayer or massively multiplayer game.

The network 350 is the Internet in the example shown in Figure 3; however in different examples, the network 350 may be any suitable communications network, such as a local area network, a wide area network, a metro area network, etc.

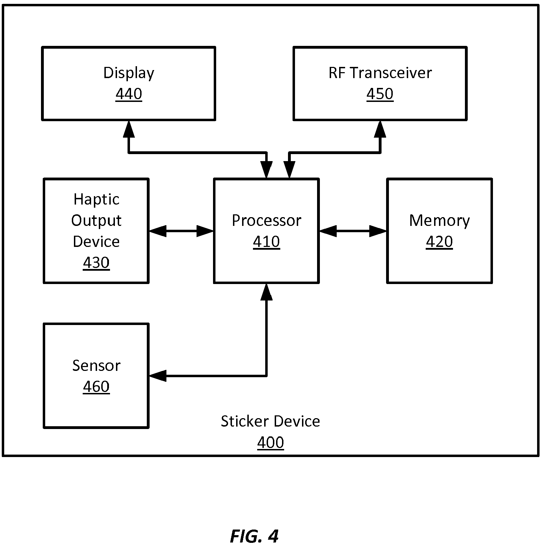

Referring now to Figure 4, Figure 4 shows an example sticker device 400 usable with example systems and methods for haptifying virtual objects using smart stickers. In this example, the sticker device 400 includes a processor 410 in communication with a memory 420, a haptic output device 430, a display 440, a wireless transceiver 450, and a sensor 460.

The processor 410 is configured to execute processor-executable instructions stored in the memory 420, such as to determine haptic effects, generate haptic signals, generate display signals, receive sensor signals, and transmit and receive information using the RF transceiver 440. The instructions may be programmed onto the sticker device 400 when the sticker is installed or manufactured, or the instructions may be provided dynamically, such as via the RF transceiver. For example, configuration parameters, such as haptic effects or identity information, may be provided to the sticker device 400 by a computing device or user interface device (e.g., a HMD) when the user begins a game.

For example, with respect to the example system 200 discussed above with respect to Figure 2, a sticker device 400 may be provided with identity information associated with a virtual safe object. Additionally, the sticker device 400 may be provided with haptic effects associated with the virtual keypad for the virtual safe, such as key press effects, combination successful effects, and combination unsuccessful effects. Such effects may be transmitted to the sticker device 400 when the user starts the game, or on the fly when the user encounters the virtual safe within the game environment. Thus, the sticker device's identity may change over time, such as based on game events (or other events), and new information may be transmitted to the sticker device 400. In some examples, however, a sticker device's identity may be statically assigned.

The sensor 460 in this example is a camera that can provide images to the processor 410. The processor 410 may receive sensor signals from the camera and determine gestures performed by a user. For example, the processor 410 may determine a press gesture performed by a user to interact with a virtual object associated with the sticker device 400. In some examples, other types of gestures may be determined as well, such as presses, twists, pulls, swipes, etc.

Other types of sensors may be employed according to various examples. For example, touch sensors may be employed, which may allow a user to touch and interact with the sticker, such as to apply pressure-based inputs (e.g., presses, swipes, etc.), contact gesture inputs (including multi-touch gestures), etc. Suitable touch sensors may include capacitive or resistive touch sensors, strain gages, piezoelectric elements, light curtains, etc. Touch sensors may be incorporated into the display 440 in some examples, such as in the case of a touch-sensitive display. In some examples, however, the touch sensor may be coupled to any surface of the sticker device 400.

In some examples, the sticker device 400 may include one or more inertial sensors, Global Positioning System ("GPS") or similar positioning sensors, etc. For example, the sticker device 400 may include one or more accelerometers, gyroscopes, etc. to detect changes in its position or orientation, which may enable the sticker device 400 to determine its location or to track its movement within a real environment. In one example, a sticker device 400 may include a GPS receiver, which may enable the sticker device 400 to determine its own geographic position. Such position or orientation information may be provided to a server 310 or remote computer 360, or to one or more HMDs. Such position or orientation may then be employed to determine a proper position and orientation of one or more virtual objects.

The sticker device 400 also includes a haptic output device 430. The haptic output device 430 in this example is a non-contact-based haptic output device that includes a speaker to output ultrasound waves. Ultrasound waves may be used to create non-contact tactile stimuli for a user's hand or finger (or other body part) in proximity to the speaker. In some examples, ultrasound waves may be generated using other types of actuators, such as piezoelectric actuators. Further, other types of non-contact-based haptic output devices may be used in some examples. For example, suitable non-contact-based haptic output devices may include compressed air dispensers, such as valves or nozzles to release puffs of air from a compressed air cartridge, electrostatic haptic output devices, thermal output devices (e.g., resistors or infrared light sources), etc. It should be noted that when used in this specification, the term "non-contact" or "non-contact-based" refers to forces that may be applied while an object, *e*.*g*., a fingertip, is not contacting a surface. However, this does not preclude contact between the object and the surface. For example, haptic effects may still be applied to a fingertip in contact with the surface, and may still be felt by the user, or examples according to this disclosure may result in contact between the object and the surface during output of a non-contact-based haptic effect, such as during output of an electrostatic force ("ESF") type haptic effect.

Example sticker devices according to this disclosure may include contact-based haptic output devices, such as DC motors, eccentric rotating masses ("ERM"), linear actuators, electrostatic friction haptic output devices, micro-electromechanical systems ("MEMS") elements, deformation haptic output devices (e.g., hydrogels, shape-memory alloys, bi-stable elements, etc.), electromagnets, etc. Further, example sticker devices may include multiple haptic output devices, including multiple different types of haptic output devices.

The display 440 in this example includes an electronic display device, such as a liquid crystal display ("LCD"), a light emitting diode ("LED") display, an organic LED ("OLED") display, an e-ink display, etc. The display 440 may receive a display signal from the processor 410 to cause the display 440 to display images or text. For example, the processor 410 may generate and transmit a display signal to cause the display 440 to display identification information for the sticker device 400. Identification information may be a bar code (including a two-dimensional bar code), an alphanumeric code, one or more symbols or glyphs, etc. In some examples, the processor 410 may generate and transmit a display signal to cause the display 440 to output other information, such as configuration information for the sticker device 400, a user interface to interact with the sticker device 440, etc.

The RF transceiver 450 is configured to enable the processor 410 to communicate using BLE in this example. However, other suitable RF transceivers or subsystems may be employed, including BT, WiFi, NFC, etc. In some examples, the sticker device 400 may include multiple different RF transceivers, or an RF transceiver usable for multiple different wireless communication techniques. In some examples, the sticker device 400 may receive power via the RF transceiver. For example, the sticker device 400 may be or may include an RFID tag and may obtain power from an RF transmitter, and may communicate using backscatter techniques. Such techniques may be used, for example, to provide identity information about the sticker device 400. Thus, any suitable wireless communication technique(s) may be employed according to different examples.

The components of the sticker device 400 discussed above are positioned within a housing of the sticker device 400. Such a housing may define one or more interior cavities within which the various components may be positioned. The housing may have a coupling device to enable the sticker device 400 to be physically coupled to another object. Suitable coupling devices may include an adhesive, such as a pressure sensitive adhesive. Other examples may include a ferromagnetic material or a ferrous material to enable magnetic coupling to an object. In some examples, stickers may be attached to an object by a strap, screw, nail, etc. In some examples, stickers may be incorporated into wearable devices, such as a wristband, a necklace, earrings, etc.

It should be appreciated that the example sticker device 400 shown in Figure 4 includes certain components that may not present in other examples. For example, sticker devices may not include sensors, haptic output devices, displays, RF transceivers, processors, or memory. For example, an inexpensive embodiment may include an adhesive label having a unique barcode printed on it, but lacking any processing or other electronic components. Further, elimination of one or more of the components shown in Figure 4 may enable cost-effective sticker devices, while still enabling at least some functionality according to this specification. For example, sensors or haptic output devices may not be employed in some examples, while still allowing a HMD to detect the sensor and display a virtual object associated with the sensor. Or a display may not be included, and instead identifying markings may be printed on or affixed to a housing for the sticker device 400. Such an example may be employed with various systems according to this disclosure, such as the systems discussed above with respect to Figures 1, 2A-2B, and 3.

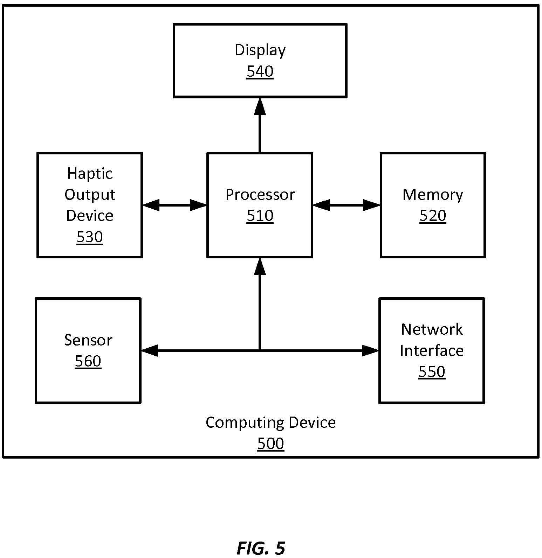

Referring now to Figure 5, Figure 5 shows an example computing device 500 usable with example systems and methods for haptifying virtual objects using smart stickers. The computing device 500 includes a processor 510 in communication with memory 520, a haptic output device 530, a display 540, a network interface 550, and a sensor 560. The processor 510 is configured to execute processor-executable instructions stored in the memory 520, such as to determine haptic effects, generate haptic signals, generate display signals, receive sensor signals, and transmit and receive information using the network interface 550.

In this example, the computing device 500 is part of a HMD and the display 540 is incorporated into a visor of the HMD. In some examples, however, the computing device may be separate from a HMD or other user interface device, such as the computing device 110 shown in Figure 1. Further, one or more server devices, such as shown in Figure 3, may be or include example computing devices.

In this example, the processor 510 receives signals from the sensor 560 and detects one or more stickers within a real environment, and generates display signals based on one or more virtual objects associated with the detected stickers. The display signals are configured to cause the display 540 to display virtual objects at locations within the HMD visor corresponding to the detected stickers. For example, the processor 510 may determine a location of a sticker with respect to the visor, such as based on one or more sensor signals received from the sensor 560. The processor 510 may then determine a location on the visor corresponding to the sticker and determine a display location for the virtual object based on the determined location on the visor. Further, the processor 510 may display the virtual object at different locations over time, such as based on movement of the HMD and visor by the user, to cause the virtual object to remain at a location corresponding to the detected sticker.

The processor 510 generates haptic output signals to cause the haptic output device 530 to output one or more haptic effects. Such effects may be any of those discussed above with respect to the sticker device 400 of Figure 4. Further, the haptic output device 530 may be any suitable haptic output device according to this disclosure. Such haptic output device 530 may be located within a housing of the computing device 500, may be worn by the user, such as on a wristband or a haptic glove, or may be included within a manipulandum gripped by the user.

The network interface 550 may be any suitable wired or wireless network interface according to this disclosure. The processor 510 may employ the network interface 550 to communicate with a user device, such as a HMD or manipulandum. In some examples, the network interface 550 may enable communications with a remote server device, such as described above with respect to Figure 3. The network interface device 550 may further enable wireless communications with a sticker device, such as via BLE, BT, WiFi, or NFC communications techniques. Further, some example computing devices 500 may include multiple network interfaces 550.

The sensor 560 in this example is a camera; however, multiple cameras may be employed in some examples. Further other types of sensors may be employed as well. For example, sensors may include accelerometers, gyroscopes, etc. to sense a position or orientation of a user device, e.g., a HMD, in a real environment.

It should be appreciated that example computing devices according to this disclosure may not include all of the components discussed above. For example, computing devices configured to operate as servers may not include a haptic output device 530 or a sensor 560, or may not include a display 540. Further, some computing devices may not include sensors or haptic output devices. Instead, the processor 510 may receive sensor information from another computing device, such as a computing device affixed to a HMD. Similarly, a computing device 500 may lack a haptic output device. In some examples, such a computing device 500 may communicate with another computing device that includes a haptic output device 530, such as within a HMD or other user manipulandum, to provide haptic signals or haptic commands to the other computing device. Still further configurations of computing devices may be employed according to different examples.

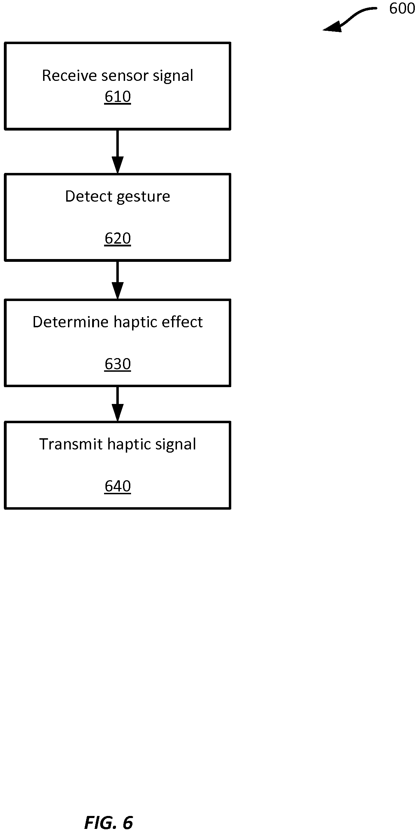

Referring now to Figure 6, Figure 6 shows an example method 600 for haptifying virtual objects using smart stickers. The description of Figure 6 will make reference to the example system 300 shown in Figure 3, the example sticker device 400 shown in Figure 4, and the example computing device 500 shown in Figure 5, however, it should be appreciated that any suitable system, sticker device, or computing device 500 may be employed according to this disclosure.

At block 610, a sticker 340a receives one or more sensor signals from a sensor 460 or sensors. In this example, the sensor 460 is a camera and the sensor signal(s) includes one or more images. In some examples, however, other types of sensors may be employed, such as proximity sensors (e.g., ultrasound sensors, light emitter/detector, BT beacons, etc.), touch sensors, pressure sensors, etc.

At block 620, the sticker 340a detects a gesture based on one or more of the sensor signals. In this example, the sticker 340a detects a gesture based on images received from the camera. The sticker's processor 410 executes a gesture-recognition technique using the received images as inputs. Such techniques may be implemented using trained machine learning techniques, or any other suitable gesture recognition technique. In some examples, the user may wear a glove or hold a device with one or more identifying marking, e.g., lights, contrasting spots, lines, or hashes, etc., that can be detected by the processor 410 or the trained machine learning technique to facilitate gesture recognition or to train the machine learning technique. In some examples, the processor 410 may receive information from a remote device, e.g., a HMD or server, identifying a detected gesture performed by the user.

At block 630, the processor 410 determines a haptic effect based on the detected gesture. For example, the processor 410 may access a look-up table with gestures and corresponding haptic effects. In some examples, the memory 420 may store multiple look-up tables, one or more of which may be associated with a different virtual environment, different application, different virtual objects etc. Thus, the processor 410 may select a look-up table associated with a then-current virtual environment, application, object, etc. It may then access the look-up table to identify a haptic effect corresponding to the detected gesture. For example, the processor 410 may determine that the user has performed a press gesture, and may determine a "press" haptic effect by accessing a look-up table and identifying the haptic effect corresponding to a "press" gesture.

In determining the haptic effect, the processor 410 may determine a magnitude or a duration of the haptic effect in addition to the type of haptic effect, though in some examples, a haptic effect may have a default magnitude and duration. For example, the processor 410 may determine a magnitude based on a determined proximity of a user to the sticker device 400. If the sticker device 400 includes a non-contact-based haptic output device 430, the processor 410 may determine a magnitude of the haptic effect based on a determined distance to the user or to the body part of the user that performed the gesture. Such a determination may be based on sensor signals received from a proximity sensor, such as discussed above with respect to block 610, or may be received from a remote computing device, such as a HMD or server device. A higher-magnitude haptic effect may be needed if the user or the user's body part is more distant from the sticker device 430. For example, the processor 410 may access a scaling factor or mapping of magnitudes to distances, such as in a look up table or calculated based on one or more equations (e.g., a haptic effect's perceived intensity at a particular output magnitude may fall off exponentially over distance). Thus, the processor may determine a magnitude (or adjust a default magnitude) based on the detected proximity or distance to the user or the user's body part or a strength of a haptic effect to be applied. For example, a determined haptic effect may have an associated magnitude, such as in a look-up table; however, to apply the specified magnitude, the sticker device may need to scale the output of the haptic output device to accommodate for a distance to the user.

The processor 410 may also determine a duration of the haptic effect. For example, the processor 410 may determine a duration based on the gesture being performed. If the user performs a press gesture, the processor 410 may determine a duration that lasts until the user discontinues the press gesture, such as by dropping their hand or by retracting their hand away from the sticker device 400. In some examples, however, a default duration for a haptic effect may be used. Alternatively, a duration may be based on a detected proximity of the user or the user's body part. For example, the more distant the user or the body part is from the sticker device 400, the longer the duration may be. Such an example may help ensure that the user still can perceive a haptic effect, even while distant from the sticker device 400.

At block 640, the processor 410 transmits a haptic signal configured to cause the haptic effect to be output. In this example, the processor 410 transmits the haptic signal to the haptic output device 430. In some examples the sticker device 400 may include multiple haptic output devices 430, and so the processor 410 may output the haptic signal to a haptic output device 430 corresponding to the type of haptic effect to be output. For example, if the haptic effect is determined to be a non-contact-based haptic effect, the processor 410 may transmit the haptic effect signal to a non-contact-based haptic output device, such as a compressed air device, rather than a contact-based haptic output device, such as an ERM. In some examples the processor 410 may select one or more haptic output devices based on an effective range of the haptic output device. For example, an ESF haptic output device may provide non-contact-based haptic effects, but within a range of a few millimeters, while a compressed air-type haptic output device may have an effective range of several centimeter to a meter or more. Thus, if a detected distance to a user is 20 centimeters, the processor 410 may transmit the haptic signal to the compressed air-type haptic output rather than the ESF haptic output device. Further, the processor 410 may make such a determination at block 630 when determining a haptic effect, such as by determining a haptic output device from a look-up table.

In some examples, the sticker device 400 may not include a haptic output device. Thus, in one such example, the processor 410 may transmit a haptic signal using the RF transceiver to the HMD 320a or other manipulandum employed by the user.

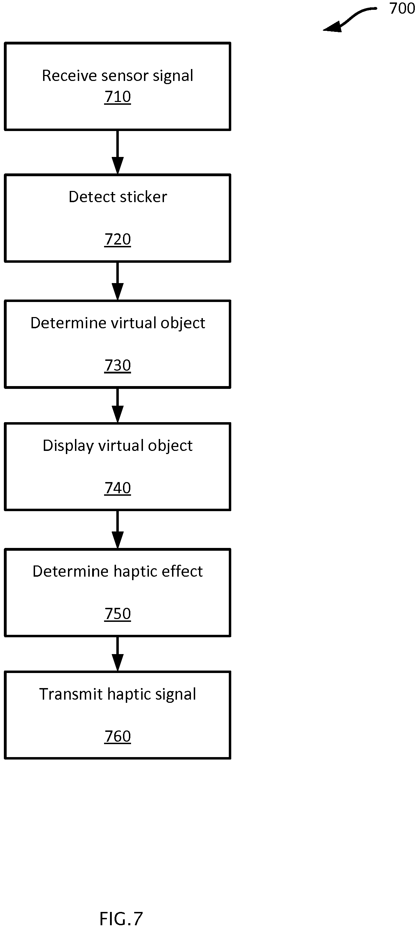

Referring now to Figure 7, Figure 7 shows an example method 700 for haptifying virtual objects using smart stickers. The description of Figure 7 will make reference to the example system 300 shown in Figure 3, the example sticker device 400 shown in Figure 4, and the example computing device 500 shown in Figure 5, however, it should be appreciated that any suitable system, sticker device, or computing device 500 may be employed according to this disclosure.

At block 710, the processor 510 associated with a HMD 320a receives one or more sensor signals from a sensor 560 or sensors. In this example, the sensor 460 is a camera and the sensor signal(s) includes one or more images. In some examples, however, other types of sensors may be employed, such as laser-based barcode sensors, RF sensors (e.g., NFC, RFID, BT, BLE, etc.), etc. As discussed above, the computing device 500 may include any number of sensors to detect the user's position, orientation, movement, etc. within a real environment. Thus, in some examples, such position-related sensors may be employed to determine a user's position in the real environment and determine a proximity to one or more sticker devices. For example, the server 310 may maintain physical locations for each sticker device 340a-b in the real environment and determine relative proximities between users and the stickers 340a-b. Alternatively, the HMDs 320a-b may access such information and determine relative proximities between users and the stickers 340a-b. Thus, in some examples, the processor 510 may receive sensor signals from one or more of such sensors, e.g., accelerometers, gyroscopes, etc. to determine the user's position within a real environment.

At block 720, the processor 510 detects one or more sticker devices 340a-b. In this example, the processor 510 detects stickers using a trained machine-learning object recognition technique using one or more images received at block 710. The object recognition technique may be trained to recognize shapes of stickers, barcodes (one dimensional or multi-dimensional), numbers or letters (e.g., displayed using a magnetic ink character recognition ("MICR")-style font), other glyphs or symbols associated with stickers in the system 300.

In some examples, the processor 510 may detect stickers based on sensor signals having other types of information. For example, the HMD's computing device 500 may receive BLE beacon or broadcast communications, or it may detect them by detecting visible light or light outside of human perception ranges emitted by one or more sticker devices 340a-b, e.g., infrared or ultraviolet.

In some examples, the HMD's computing device 500 may detect stickers based on sticker information received from a server 310, 360, or that is otherwise accessible by the computing device 500. The sticker information may include position information, orientation information, identification information, capabilities (e.g., RF communication, haptic output, etc.) of the sticker, etc. The HMD 320a may determine its position and orientation within the real environment using position sensors (e.g., accelerometers, gyroscopes, etc.) and determine whether one or more stickers at known locations within the real environment are visible to the user based on the sticker information and the HMD's determined position and orientation. The computing device 500 then detects one or more stickers based on such a determination.

In some examples, the computing device 500 determines identification associated with a detected sticker. For example, the computing device 500 may obtain a barcode or an alphanumeric sequence from the sticker, such as by extracting such information from one or more images received from the camera. In some examples, the computing device 500 may determine identification based on RF signals received from a sticker device. After detecting a sticker device, the computing device 500 may transmit an RF signal to the detected sticker requesting identification information. The computing device 500 may receive identification information about one or more stickers in the environment in conjunction with receiving position information about such stickers, as described above.

At block 730, the processor 510 determines a virtual object associated with the detected sticker device. In this example, the processor 510 requests one or more virtual objects from the server 310 based on the detected sticker and, in response, receives information about one or more virtual objects. Such information may include graphical information to render the virtual object, identification information about one or more virtual objects stored in memory 520, haptic information, etc.

In some examples in addition to determining a particular virtual object, the computing device 500 may determine a displayed size or orientation of the virtual object based on a position or orientation of a sticker device. For example, the computing device may determine a distance from a HMD to the detected sticker, and determine a scaling factor for the virtual object so that the virtual object's apparent size is based on the distance between the HMD and the sticker device. Distance information may be based on information received form the sticker device, such as position or orientation information, or may be determined by the HMD 320a-b, server 310, or remote computing device 360. Similarly, an orientation of the virtual object may be determined based on information received from the sticker device, or based on an orientation determined from a received sensor signal, such as an orientation determined from one or more images received from a camera, or based on one or more sensors within the real environment configured to sense the position or orientation of the sticker device.

At block 740, the processer 510 generates and transmits a display signal to the HMD display to display the virtual object(s). Virtual objects may include user interface objects, game objects (e.g., weapons, in-game money, armor, power-ups, etc.), avatars of one or more player-characters or non-player characters within a video game, informational displays, advertisement or promotions, etc. In some examples virtual objects may be static and not change over time. However, it should be appreciated that as a user moves within a real environment, her perspective in the virtual environment may change, which may cause the perspective on the virtual object to change, resulting in displaying a different portion of a virtual object. Thus, display signals for a static virtual object may change over time as different parts of the virtual object are displayed. In addition, the system 300 may display animated virtual objects, where the virtual objects move without user interaction, or virtual objects that change based on user interactions, and thus may change over time.

In addition, the user may be able to interact with some virtual objects, such as by collecting the virtual object into inventory, activating or deactivating functionality provided by the virtual object, changing user interface settings for a device using the virtual object, moving the virtual object, fighting with or destroying the virtual object, or otherwise manipulating the virtual object. To interact with such virtual objects, the user may perform on or more gestures, physically contact the sticker device to provide inputs (e.g., contact-based gestures, including pressure-based gestures), employ a manipulandum to provide one or more commands to the computing device 500 or the server 310 to affect the virtual object or the virtual environment, etc., which may cause a display of a virtual object to change.

At block 750, the computing device 500 determines a haptic effect. In this example the processor 510 determines a haptic effect based on the displayed virtual object. For example, the processor 510 may determine a haptic effect based on the virtual object first being displayed, e.g., first appearing in the user's field of view. In some examples the processor 510 may determine a haptic effect based on an action taken by the virtual object or an interaction with the virtual object. For example, the user may apply a sticker to their forearm or hand that is associated with a virtual kitten. When the user looks at the sticker, she may be presented with an animation of the kitten walking on her arm or hand. The processor may determine one or more haptic effects based on the kitten walking on the user's arm. Alternatively, if the sticker is applied to an object in the real environment and is associated with a defensive system, e.g., a laser weapon, in a combat game, the processor 510 may determine a haptic effect to indicate that the user has been detected or targeted by the defensive system.

Determining haptic effects may include accessing one or more look-up tables to identify haptic effects associated with a virtual object or interactions associated with the virtual object, such as alerts, damage taken from the virtual object, firing a weapon, movement of the virtual object, etc. In some examples, the processor 510 may receive haptic effects or haptic signals from a server 310, 360, or from a sticker device 340a-b. For example, a sticker device 340a may determine a haptic effect based on a sensed interaction with the user, and may generate and transmit a haptic effect to the user's HMD 320, where the computing device 500 determines the haptic effect based on the received haptic effect.

At block 760, after determining a haptic effect, the processor 510 transmits a haptic signal to a haptic output device. In this example, the processor 510 transmits the haptic signal to the computing device's haptic output device 530. However, in some examples the processor 510 may transmit a haptic signal to a sticker device, via RF transmission, to cause the sticker device to output a haptic effect. The processor 510 may transmit a haptic signal to a computing device associated with another HMD, or to multiple different devices to cause haptic effects.

While some examples of methods and systems herein are described in terms of software executing on various machines, the methods and systems may also be implemented as specifically-configured hardware, such as a field-programmable gate array (FPGA) specifically to execute the various methods. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable storage media, that may store instructions that, when executed by the processor, can cause the processor to perform the steps described herein as carried out, or assisted, by a processor. Examples of computer-readable media may include, but are not limited to, an electronic, optical, magnetic, or other storage device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

## Claims

1. A sticker device for haptic interaction in augmented or virtual reality comprising:
a haptic output device;
a non-transitory computer-readable medium storing processor-executable instructions; and
a processor in communication with the haptic output device and the non-transitory computer-readable medium, the processor configured to execute the processor-executable instructions to:
receive a sensor signal from a sensor;
determine a haptic effect based on the sensor signal; and
transmit a haptic signal to the haptic output device to cause the haptic output device to output a haptic effect.

2. The sticker device of claim 1, wherein the haptic output device comprises a non-contact haptic output device.

3. The sticker device of claim 2, wherein the non-contact haptic output device comprises any one or more of an ultrasound device, an electrostatic friction device, or a compressed air device.

4. The sticker device of any preceding claim, further comprising a housing, wherein the housing comprises an identification mechanism and/or a coupling device to couple the housing to an object.

5. The sticker device of claim 4, wherein the housing comprises an identification mechanism and the identification mechanism is at least one of a bar code, a display, or a radio frequency identification ("RFID") tag.

6. The sticker device of claim 4 or claim 5, wherein the housing comprises a coupling device to couple the housing to an object and the coupling device is at least one of an adhesive, a ferromagnetic material, or a ferrous material.

7. The sticker device of any preceding claim, further comprising a sensor, wherein the sensor comprises a camera, and wherein the sensor signal comprises one or more images, and wherein the processor is configured to execute the processor-executable instructions to determine a gesture based on the sensor signal.

8. A device comprising:
a non-transitory computer-readable medium storing processor-executable instructions; and
a processor in communication with a sensor and the non-transitory computer-readable medium, the processor configured to execute the processor-executable instructions to:
receive a sensor signal from a sensor;
detect a sticker device for haptic interaction in augmented or virtual reality based on the sensor signal;
determine a virtual object associated with the sticker device; and
output a signal to cause a display device to display the virtual object.

9. The device of claim 8, wherein the processor is configured to execute the processor-executable instructions to output a signal to cause the display device to display the virtual object at a location corresponding to the sticker device.

10. The device of claim 8 or claim 8, wherein the processor is configured to execute the processor-executable instructions to:
receive sticker location information from a remote computing device;
determine position and location information for the device in a real environment based on the sensor signal; and
detect the sticker device based on the position and location information for the device and the sticker location information.

11. The device of any of claims 8 to 10, further comprising a sensor and wherein the sensor comprises a camera and/or a radio frequency identification ("RFID") reader.

12. The device of claim 11, wherein the sensor comprises a camera and the processor is configured to execute the processor-executable instructions to determine either a) a visual identifier of the sticker device, and to determine the virtual object based on the visual identifier,
and/or b) a gesture based on the sensor signal.

13. The device of claim 11 or claim 12, wherein the sensor comprises a radio frequency identification ("RFID") reader and wherein the processor is configured to execute the processor-executable instructions to receive an identifier from the RFID reader, the identifier obtained from an RFID tag associated with the sticker device, and to determine the virtual object based on the identifier.

14. The device of any of claims 8 to 13, wherein the processor is configured to execute the processor-executable instructions to output a signal to cause the display device to display an animation of the virtual object at a location corresponding to the sticker device.

15. The device of any of claims 8 to 14, wherein the processor is configured to execute the processor-executable instructions to:
responsive to determining that the sticker is coupled to a user, output a signal to the sticker device to cause the sticker to output a contact-based haptic effect; and
responsive to determining that the sticker device is not coupled to the user and that the sticker device is within an interaction range, output a signal to the sticker device to cause the sticker device to output a non-contact haptic effect, optionally wherein the non-contact haptic effect comprises one or more of an ultrasound effect, an electrostatic friction effect, a compressed air effect.
